Europäisches Patentamt

**European Patent Office**

**Office européen des brevets**

(19)

(11)  **EP 1 251 152 B1**

(12)  **EUROPÄISCHE PATENTSCHRIFT**

(45) Veröffentlichungstag und Bekanntmachung des Hinweises auf die Patenterteilung:
**28.09.2005  Patentblatt 2005/39**

(51) Int Cl.⁷: **C09C 1/62**, C09C 1/00, C09D 5/36, C08K 9/02, B41M 3/14

(21) Anmeldenummer: **02003502.8**

(22) Anmeldetag: **15.02.2002**

(54) **Eiseneffektpigmente**

Iron effect pigments

Pigments métalliques à effet

(84) Benannte Vertragsstaaten:
**AT BE CH CY DE DK ES FI FR GB GR IE IT LI LU MC NL PT SE TR**

(30) Priorität: **23.03.2001  DE 10114446**

(43) Veröffentlichungstag der Anmeldung:
**23.10.2002  Patentblatt 2002/43**

(73) Patentinhaber: **Eckart GmbH & Co. KG**
**90763 Fürth (DE)**

(72) Erfinder:
• **Ostertag, Werner, Dr.**
**67267 Grünstadt (DE)**
• **Trummer, Stefan, Dr.**
**90480 Nürnberg (DE)**
• **Henglein, Frank, Dr.**
**90409 Nürnberg (DE)**
• **Greiwe, Klaus, Dr.**
**91207 Lauf (DE)**

(74) Vertreter: **Schneck, Herbert et al**
**Rau, Schneck & Hübner**
**Patentanwälte**
**Königstrasse 2**
**90402 Nürnberg (DE)**

(56) Entgegenhaltungen:
EP-A- 0 959 108          WO-A-98/17731
DE-A- 4 104 310          US-A- 5 466 286

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 1 251 152 B1

## Beschreibung

Flakes aus Eisen werden entsprechend der derzeit gängigen Technologie aus Eisengrieß hergestellt, der durch Verdüsen von schmelzflüssigem Eisen gewonnen wird. Die Pigmentherstellung erfolgt über Stampf- oder Mahlverfahren bei denen der Grieß zerkleinert und verformt wird. Wie bei allen Metallpigment-Herstellverfahren werden dabei Schmiermittel zugegeben um Kaltverschweißung der Pigmentpartikel zu vermeiden. In den Beispielen 1 und 8 in EP 0673 980 wird detailliert die gängige Technologie zur Herstellung von plättchenförmigem Eisenpigment beschrieben. Die Nachteile des Herstellverfahrens liegen darin, daß der mittels Verdüsung hergestellte Eisengrieß stets relativ grob ist und eine breite Partikelgrößenverteilung hat. Demzufolge können nur relativ grobe Flakes aus dem durch Verdüsung hergestellten Eisengrieß hergestellt werden. Flakes im für Effektpigmente bevorzugten Bereich zwischen 6 und 36 μm lassen sich nur über energieaufwendige und langwierige Mahlverfahren gewinnen oder man muß sich auf Siebfraktionen vor und/oder nach der Mahlung beschränken. Dies macht ihre Herstellung unrentabel. Die Form der über Verdüsung gewonnenen Eisenflakes ist eine unregelmäßige mit rauhen Oberflächen und ausgefransten Ecken, was aufgrund vermehrter Lichtstreuzentren eine relativ geringe optische Qualität bedingt.

Optisch hochwertige Metallflakes lassen sich durch Vermahlung nur dann herstellen, wenn die Vermahlung so schonend durchgeführt wird, daß der Grieß lediglich verformt und nicht zerkleinert wird. Voraussetzung für eine solche schonende Vermahlung ist eine hohe Duktilität des Metallgrießes, welche beispielsweise bei Aluminium gegeben ist. Bekanntlich lassen sich optisch besonders hochwertige Aluminiumflakes bei der Verwendung von Grieß sphärischer Morphologie herstellen. Wird dieser Grieß bei der Vermahlung lediglich verformt und nicht zerkleinert, so entstehen Flakes mit runden Rändern und glatter Oberfläche (sogenannte "Silberdollars"). Bedingt durch die regelmäßige Form weisen diese Pigmente aufgrund der geringeren Lichtstreuung in einer Beschichtung eine wesentlich gerichtetere Reflexion von einfallendem Licht auf als Pigmente vergleichbarer Größenverteilung, die jedoch aus unförmigem Grieß und/oder durch Zerkleinerung gewonnen wurden.

Optisch noch anspruchsvollere Metallpigmente lassen sich durch PVD (Physical Vapor Deposition) -Verfahren herstellen. Bei dieser alternativen Technologie werden Metallfilme im Vakuum auf Substraten abgeschieden, anschließend abgelöst und pulverisiert. Diese Pigmente sind jedoch überproportional teuer und finden außer bei Aluminium bislang keine Anwendung. Eisenflakes, die nach diesem Verfahren möglicherweise hergestellt werden können, bleiben im Rahmen dieser Erfindung außer Betracht.

Flakes aus Eisenlegierungen wie Edelstahl - oder Hastalloy - Flakes sind ebenfalls nicht Gegenstand der vorliegenden Erfindung. Im allgemeinen fehlen ihnen der spezifische Farbton und Glanz von Eisen. Darüber hinaus zeigen Eisenlegierungen meist eine weniger günstige Verformbarkeit und geringeren bzw. keinen nutzbaren Magnetismus.

Die vorliegende Erfindung konzentriert sich auf unlegiertes Eisen. Ziel der Erfindung war es, ein hochglänzendes weichmagnetisches Effektpigment mit der typischen Coloristik von Eisen zu entwickeln, welches in passivierter Form bereitsteht. Der Herstellungsprozeß soll dergestalt geführt werden, daß bei der Mahlstufe die Verformung und nicht die Zerkleinerung die Hauptrolle spielen. Das Effektpigment sollte für den dekorativen aber auch funktionalen Bereich bei Beschichtungen, Kunststoffen, im Druck, in der Kosmetik und in Glas und Keramik Anwendung finden.

Es wurde nun überraschenderweise gefunden, daß man bei Verwendung von Carbonyleisenpulver als Ausgangsmaterial Eisenflakes durch Vermahlung in einer insbesondere für den Automobillack gewünschten Größe und in einer vom Aluminium bekannten "Silberdollarform" hergestellt werden kann. Ebenfalls läßt sich, bei entsprechend schonender Vermahlung, das Größen-/Dickenverhältnis überraschend kontrolliert einstellen. Carbonyleisenpulver, welches reduzierend behandelt wurde, zeichnet sich durch äußerst hohe Reinheit, Duktilität, geringe Partikelgröße, sphärische Morphologie und enge Partikelgrößenverteilung aus. Die Effektpigmente aus Weicheisen zeigen ferromagnetisches Verhalten und können im Fall einer Applikation im Magnetfeld ausgerichtet werden, was zu äußerst effektvollen, dem menschlichen Auge dreidimensional anmutenden Strukturierungen führt.

Produkt- und Verfahrensentwicklung der vorliegenden Erfindung zielen ab auf die Eliminierung der Eisenverdüsung sowie die Zerkleinerung des durch Verdüsung erhaltenen Eisengrießes. Tatsächlich läßt sich selbst mit moderner Düsentechnik kein Ausgangsgrieß für die Vermahlung herstellen, der auch nur annähernd die mit Carbonyleisenpulver vergleichbaren positiven Eigenschaften erreicht, welche für die Produktion von Eisen-Effektpigmenten in einer "Silberdollarform" notwendig ist. Will man den Zerkleinerungsprozeß bei der Vermahlung von Eisengrieß vermeiden, so ist bei einem Endprodukt mit einem mittleren Plättchendurchmesser von 6 bis 36 μ von einer mittleren Partikelgröße beim Einsatzprodukt von 1 bis 15, vorzugsweise von 2 bis 8 μ auszugehen. Das Einsatzprodukt sollte, wie dies bei Carbonyleisenpulver der Fall ist, eine enge Partikelgrößenverteilung haben.

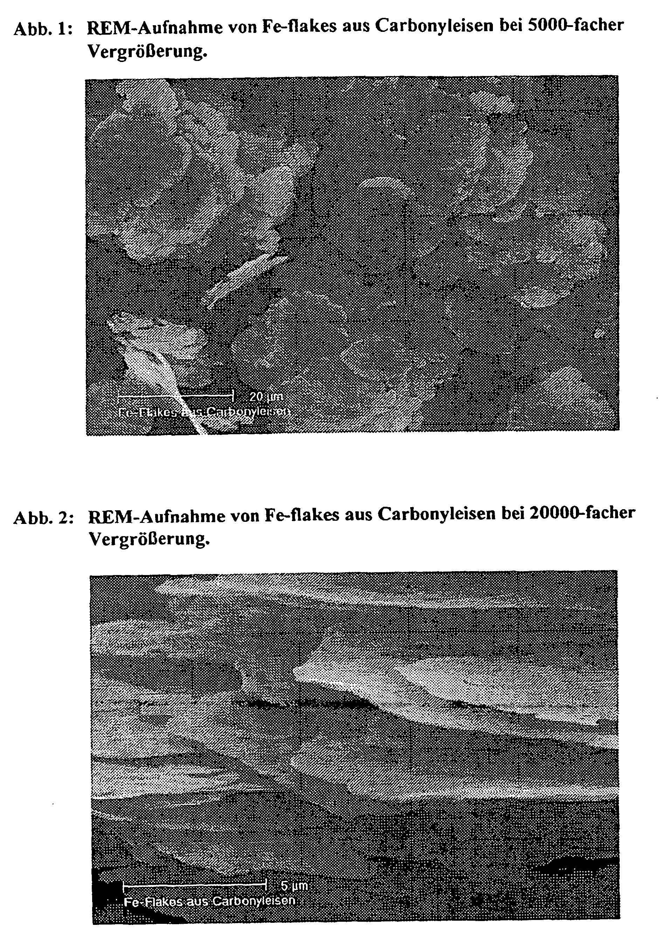

Carbonyleisenpulver wird hergestellt durch Zersetzung von dampfförmigen Eisenpentacarbonyl $Fe(CO)_5$ in Hohlraumzersetzern (vgl. Prospekte der BASF AG, Ludwigshafen, RCA 3210, 0686-2.0, Abb.1) und ist kommerziell verfügbar (BASF AG, Ludwigshafen sowie ISP, Wayne, N.J.). Allerdings sind diese Pulver zunächst relativ kornhart und enthalten bis zu 1,5% Kohlenstoff, etwa 1% Sauerstoff und bis zu 1% Stickstoff. Ihr Eisengehalt liegt bei 97%. Werden diese Pulver einer Behandlung bei erhöhter Temperatur im Wasserstoffstrom bzw. in wasserstoffhaltiger Atmosphäre unterzogen so entsteht das sogenannte "reduzierte Carbonyleisenpulver", das sich durch einen Eisengehalt von über 99,5% und hohe Duktilität auszeichnet und sich in besonderer Weise als Ausgangsprodukt bei der Vermahlung zur Herstellung von Eisen-Effektpigmenten eignet. Auch reduziertes Carbonyl-eisenpulver ist kommerziell verfügbar (BASF AG, ISP). Derzeit werden die Pulver im Bereich der Pulvermetallurgie, für medizinische Zwecke und bei der Herstellung elektronischer Bauteile eingesetzt.

Die Verwendung von reduziertem "Carbonyleisenpulver" mit einer mittleren Partikelgröße von 0,5 bis 15 µm, vorzugsweise 1 bis 10 µm und der bei Carbonyleisenpulver typischen engen Korngrößenverteilung erlaubt die Herstellung von Eisenflakes mit hohem Glanz und einem gezielt einstellbaren Durchmesser- zu Dickenverhältnis (Formfaktor) und einer an die "Silberdollar"-Form von Aluminiumpigmenten anlehnende Formgebung.

Mit Vorteil ist eine mittlere Partikelgröße der Eisenplättchen von 5 bis 100 µm, insbesondere 6 bis 60 µm, und eine mittlere Dicke von 500 bis 30 nm, insbesondere von 200 bis 400 nm, vorgesehen.

Die Nano-/Mikrohärte von reduziertem Carbonyleisengrieß wurde im Vergleich zu Aluminiumgrieß (Reinheit: 99,7 %) bestimmt. Die Bestimmung wurde mit einem Hysitron TriboScope™ anhand von in Epoxidharz eingebetteten Schliffen bestimmt. Carbonyleisenpulver wies eine dreifach geringere Nano-/Mikrohärte (0,61 GPa) als der Aluminiumgrieß (1,85 GPa) auf.

Die geringere Mikrohärte von Carbonyleisen ermöglicht eine relativ stärkere Verformung des Grießes im Vergleich zu Aluminium. Von Besonderheit ist dieser Effekt u.a. für die Deckkraft metallischer Beschichtungen. Aluminiumpigmente besitzen nicht zuletzt aufgrund der geringen Dichte (2,7 g/cm$^3$) eine hohe spezifische Deckkraft. Metalle mit höheren Dichten wie Messing, Eisen (7,87 g/cm$^3$) usw. sind vergleichsweise benachteiligt. Durch einen höheren Formfaktor bei der Vermahlung von Carbonyleisenpulver kann dieser Nachteil jedoch ausgeglichen werden.

Die Formgebung der Partikel im Zuge der Mahlung kann trocken oder naß d.h. in Gegenwart von Lösemitteln wie Testbenzin, Mineralöl, Toluol, Alkoholen, Chlorkohlenwasserstoffen, Wasser oder Gemischen derselben erfolgen. Als Mahlkörper kommen Stahlkugeln mit einer Größe von 0,5 mm bis 25 mm in Frage. Andere Mahlkörper aus z.B. Keramik oder Glas können ebenfalls Verwendung finden. Bevorzugt ist die Naßmahlung, da sie schonender ist und im Anschluß an die Mahlstufe eine bequeme Klassierung des Mahlgutes über Dekanter erlaubt. Außerdem ermöglicht die Naßmahlung die bequeme Verteilung von Schmiermitteln bzw. von Inhibitorsubstanzen oder Korrosionsschutzmittel über das gesamte Mahlgut

Als Mühlen kommen Rührwerkskugelmühlen, Kollermühlen, Trommelkugelmühlen und andere Aggregate in Frage. Besonders bevorzugt sind Drehrohrkugelmühlen.

Im einzelnen wird bei der Herstellung von hochglänzendem weichmagnetischem Effektpigment dergestalt vorgegangen, daß "reduziertes Carbonyleisenpulver" einer bestimmten Teilchengröße zusammen mit Lösemittel wie beispielsweise Testbenzin in eine Kugelmühle eingetragen werden. Um Kaltverschweißungen zu vermeiden, werden Schmiermittel wie Ölsäure, Stearinsäure oder auch spezielle Inhibitorsubstanzen zugesetzt, wobei sich die Menge nach der freien spezifischen Oberfläche (BET) der ausgewalzten Eisenpigmente richtet. Im allgemeinen kommen 0,5 bis 6% Ölsäure oder Stearinsäure bezogen auf das Gewicht des Eisenpulvers zum Einsatz. Die Mahldauer liegt zwischen 0,3 und 10 Stunden.

Die Passivierung der Eisenflakes kann durch Zusatz von Inhibitorsubstanzen und Korrosionsschutzmitteln bereits in der Mahlphase oder durch eine entsprechende Beschichtung im Anschluß an die Mahlstufe erfolgen. Nach abgeschlossener Mahlung und eventueller Nachbeschichtung wird das Produkt filtriert, getrocknet und einer Schutzsiebung unterzogen. Als Option können die plättchenförmigen Eisenpartikel vor der Filtration im Dekanter auch einer Klassierung unterzogen und dabei nach verschiedenen Partikelgrößenfraktionen aufgetrennt werden.

Bei der Trockenvermahlung wird "reduziertes Carbonyleisenpulver" zusammen mit Schmiermittel und eventuell auch Inhibitorsubstanzen in eine belüftete Kugelmühle gegeben und gemahlen. Wie bei der Naßmahlung sind die Kugeln aus Stahl, Keramik oder Glas. Sie können um so kleiner sein, je feiner das eingebrachte Carbonyleisenpulver ist. In der Praxis werden meist Kugeln zwischen 0,5 und 8 mm verwendet.

Für eine effiziente Verformung der sphärischen Partikel des Carbonyleisenpulvers muß dieses einen möglichst hohen Reinheitsgrad besitzen. Daher muß die Reduktion, d.h. das Tempern des Carbonyleisenpulvers in der wasserstoffhaltigen Atmosphäre, zu möglichst weitgehend im Kohlenstoff- und Stickstoffgehalt abgereicherten Pulvern führen.

Die Materialeigenschaften des reduzierten Carbonyleisenpulvers müssen jenen von Weicheisen, d.h. reinem Eisen, möglichst nahe kommen. Insbesondere für die effiziente mechanische Verformung in der Kugelmühle, ist es wichtig, daß die Partikel eine Härte unter 5,0 (Mohsche Skala) - Weicheisen hat eine Härte von 4,5 - haben. Die Partikel müssen zäh, duktil und polierfähig sein. Die kommerziellen "reduzierten Eisencarbonylpulver" genügen i.a. diesem Anforderungsprofil. Sie haben einen Eisengehalt über 99,5%, Kohlenstoff-Werte $\leq$ 0,005% und Stickstoff-Werte $\leq$ 0,01%. Im Sauerstoffgehalt liegen sie unter 0,4%, meist sogar unter 0,2%. Metallische Verunreinigungen sind in den Pulvern nur in geringsten Mengen vorhanden, so z.B. Nickel (0,001%), Chrom (< 0,015%) und Molybdän (< 0,002%). Die mittleren Partikelgrößen der kommerziell erhältlichen Produkte reichen von 1 μm bis zu 10 μm (vgl. technische Prospekte zu Carbonyleisenpulver von BASF und ISP). Im Zuge des reduzierenden Temperns von Carbonyleisenpulver kommt es zuweilen zur Ausbildung von Agglomeraten. Diese lassen sich aber leicht über übliche Methoden (Sieben, Dekantieren) entfernen.

Unter Verwendung von kommerziell erhältlichen reduzierten Eisencarbonylpulver gelingt es je nach Wahl des mittleren Partikeldurchmessers des Einsatzproduktes, plättchenförmige Eiseneffektpigmente mit der mittleren Partikelgröße von 3 bis 60 μm, insbesondere von 6 bis 36 μm herzustellen. Das Durchmesser-zu Dickenverhältnis der Plättchen läßt sich über die Variation der Mahldauer einstellen. Längere Mahldauer führt unter sonst gleichen Bedingungen zu einem höheren Durchmesser-zu Dickenverhältnis. Während prinzipiell jedes Durchmesser-zu Dickenverhältnis von 5 bis 500 einstellbar ist, werden i.a. Durchmesser- zu Dickenverhältnisse zwischen 40 und 400 bevorzugt.

Die Passivierung der plättchenförmigen Eisenpigmente ist von besonderer Bedeutung, da Eisenpulver, die nicht passiviert sind, in fein verteilter Form mit Luftsauerstoff heftig, sogar unter Feuererscheinung, reagieren können. In Gegenwart von Wasser findet Korrosion statt. Zwei generelle Passivierungsansätze spielen eine Rolle, die einzeln, aber auch gemeinsam zum Zuge kommen können: Passivierung über Inhibitoren und Passivierung durch Barriereschichten chemischer und physikalischer Art. Inhibitoren werden, wenn sie aufgrund ihrer Konsistenz auch als Schmiermittel zur Verhinderung der Kaltverschweißung der Partikel dienen, zweckmäßigerweise bereits während der Vermahlung zugesetzt. Im anderen Fall werden sie nach der Vermahlung adsorptiv auf das Pigment aufgebracht.

Barriereschichten werden chemisch auf das Pigment aufgebracht. In der Regel ist damit keine Veränderung des optischen Eindrucks des Pigmentes verbunden, da die Barriereschichten relativ dünn sind (10 bis 100 nm) und zweckmäßigerweise aus einem Material mit niedrigem Brechungsindex (< 1,7) bestehen, um keine Interferenzreflektion auszulösen.

Der Wirkungsmechanismus der Passivierungsschichten ist komplex. Bei Inhibitoren beruht er zumeist auf sterischen Effekten. Der größte Teil der Inhibitoren hat daher auch eine orientierende Wirkung im Sinne von "leafing" und "non-leafing" (im Medium aufschwimmend und nicht aufschwimmend).

Die Inhibitoren werden i.a. in niedrigen Konzentrationen in der Größenordnung von 0,1 bis 6% bezogen auf das Gewicht des eingesetzten Carbonyleisenpulvers zugegeben. Für die Passivierung von Eisenflakes kommen in Frage:
Organisch modifizierte Phosphonsäuren der allgemeinen Formel $R\text{-}P(O)(OR_1)(OR_2)$, wobei: R = Alkyl (verzweigt oder unverzweigt), Aryl, Alkyl-aryl, Aryl-alkyl und $R_1, R_2$ = H, $C_nH_{2n+1}$, mit n = 1-6 ist. $R_1$ kann gleich oder unterschiedlich zu $R_2$ sein.

Organisch modifizierte Phosphorsäuren und -ester der allgemeinen Formel $R\text{-}O\text{-}P(OR_1)(OR_2)$ mit R = Alkyl (verzweigt oder unverzweigt), Aryl, Alkyl-aryl, Aryl-alkyl und $R_1, R_2$, = H, $C_nH_{2n+1}$, mit n = 1-6 ist.

Verwendet werden können reine Phosphonsäuren oder -ester oder Phosphorsäuren oder -ester oder Mischungen verschiedener Phosphonsäuren und/oder -ester oder Mischungen verschiedener Phosphorsäuren und/oder -ester oder beliebige Mischungen verschiedener Phosphonsäuren und/oder -ester mit verschiedenen Phosphorsäuren und/oder -ester.

Weiterhin ist die Substanzklasse der Sauerstoff, Schwefel und Stickstoff enthaltenden Heterocyclen zu nennen, zu der Inhibitoren wie Mercapto - Benzthiazolyl -Bernsteinsäure gehören, fernerhin Schwefel/ Stickstoff enthaltende Heterocyclen wie beispielsweise Thioharnstoffderivate, darüber hinaus aliphatische und cyclische Amine, darunter auch Zinksalze von Aminocarboxylaten oder polymere Aminsalze mit Fettsäuren. Daneben können auch höhere Ketone, Aldehyde und Alkohole (Fettalkohole), Thiole, b-Diketone und b-Ketoester verwendet werden, darüber hinaus organisch modifizierte Silane und eine Vielzahl längerkettiger ungesättigter Verbindungen. Ebenfalls zu nennen sind Fettsäuren, längerkettige Mono- und Dicarbonsäuren und deren Derivate. Hierzu gehören u.a. Ölsäure und Stearinsäure. Inhibitoren zeigen meist eine sehr geringe Löslichkeit im verwendeten Lösemittel bei der Naßmahlung.

Die Passivierung über Korrosionsschutzbarrieren mit chemischer und physikalischer Schutzwirkung ist auf vielfältige Weise realisierbar. So läßt sich die Barrierewirkung der Korrosionsschutzschicht verbessern durch die Einwirkung von Phosphorsäure, phosphoriger Säure, molybdat-, phosphor- und siliziumhaltigen Heteropolysäuren, Chromsäure, Borsäure und weiteren bekannten Korrosionsschutzmitteln, wie sie beispielsweise in Farbe und Lack (1982) S 183-188 beschrieben sind. Ebenfalls können Oxidschichten wie $SiO_2$, $ZrO_2$, $Cr_2O_3$ oder$Al_2O_3$ oder Mischungen derselben gebildet werden. Bevorzugt werden nach Sol-Gel Methoden hergestellte $SiO_2$-Schichten mit Schichtdicken von 20 bis 150 nm.

Plättchenförmiges Eiseneffektpigment findet nicht nur im dekorativen Bereich (Beschichtungen, Kunststoffeinfärbungen, Druck, Kosmetik) Verwendung in dem es um die durchschnittliche spezielle Optik von Eisenflakes geht. Aufgrund der elektrischen Leitfähigkeit und hohen magnetischen Permeabilität von Eisenflakes gibt es darüber hinaus zahlreiche spezielle Anwendungen im funktionalen Bereich, wie z.B. im Wertschriftenbereich. Darüber hinaus lassen sich Eisenflakes als Einsatzprodukt bei der Herstellung komplizierter aufgebauter mehrschichtiger Effektpigmente wie beispielsweise Interferenzreflexionspigmenten oder optisch variablen Pigmenten verwenden.

Unter Bezugnahme auf die folgenden Beispiele wird die Erfindung weiter beschrieben, ohne sie zu beschränken.

**Beispiel 1**

100g reduziertes Carbonyleisenpulver der Firma BASF AG Ludwigshafen, mit der Bezeichnung "Carbonyleisenpulver CN", mittlere Partikelgröße 5,5 $\mu$m.

(d10 - Wert 3,5 $\mu$m, d90 - Wert 15 $\mu$m), Eisengehalt 99,8 % (C $\leq$ 0,006%, NL < 0,01%, 0 = 0,18%) werden in eine Kugelmühle mit der Dimension 30 cm x 25 cm, die zur Hälfte mit 1,5 mm großen Stahlkugeln gefüllt ist, eingetragen. Dazu werden 0,56 l Testbenzin und 2,8g eines Gemisches aus Stearin- und Ölsäure gegeben.

Danach wird die Mühle verschlossen und sechs Stunden lang bei 56 Umdrehungen pro Minute gedreht. Anschließend wird die Mühle entleert, das Mahlprodukt mit Testbenzin ausgewaschen und mittels einer Siebung (25 $\mu$m) von dem Mahlkörper getrennt.

Das erhaltene Effektpigment zeigt hohen metallischen Glanz und die magnetische Permeabilität von Weicheisenpulver. Aus Laserstrahlbeugungsmessungen (Cilas-Messungen) wurden folgende Kenngrößen der Größenverteilung ermittelt: $d_{90}$: 27 $\mu$m, $d_{50}$: 18 $\mu$m (mittlere Partikelgröße) und $d_{10}$: 10 $\mu$m und die spezifische Oberfläche wurde anhand von BET-Messungen zu 4 m$^2$/g ermittelt. In der beigefügten Abb. 1 sind REM-Aufnahmen der Pigmente gezeigt, die eine relativ runde Randform der Pigmente erkennen lassen. Die Kennwerte der Größenverteilung sowie die Form ist typisch für "Silberdollarpigmente".

Aus der beigefügten Abb. 2 erkennt man, daß die Pigmente sehr dünn ausgewalzt sind. Die Dicke einzelner Eisenflakes liegt bei ca. 100 nm, was weniger als die Hälfte entsprechender Aluminiumpigmente ist.

Die mittlere Dicke der Pigmente wurde über eine sogenannte Spreitungsmethode ermittelt: Hierbei gibt man 0,2 g des Pigmentpulvers für 15min in eine 5%-ige Lösung aus Stearinsäure in Testbenzin. Die Stearinsäure zieht auf die Pigmentoberfläche auf und verleiht dieser einen stark hydrophoben Charakter. Anschließend wird eine kleine, definierte Menge des Pulvers auf reines Wasser in einer "Spreitwanne" gebracht. Nach vorsichtigem Rühren des Pigmentfilmes zur besseren Verteilung der Pigmente wird dieser mittels zweier Metallstäbe auf dem Wasser gespreitet, bis ein deckender, glänzender Film entsteht. Wird dieser Film zu weit expandiert, so treten Löcher auf. Wird er zu stark komprimiert, bekommt er eine faltige Struktur. Auf diese Weise ist es dem geübten Experten möglich, reproduzierbar eine "Monolage" Metallpigmentfilm auf dem Wasser herzustellen. Die Fläche des gespreiteten Films wird ausgemessen. Die spezifische Oberfläche berechnet sich nach:

$$A_{spez.} = 2 \; * \; \frac{Spreitfläche[cm^2]}{Einwaage[g]}$$

Daraus kann die mittlere Dicke der Plättchen in nm berechnet werden:

$$\bar{d} = \frac{10^7}{A_{spez.} \; * \; \delta_{Fe}}$$

Für die oben beschriebene Probe wurde ein Wert von 146 nm ermittelt.

Dispergiert man das plättchenförmige Eisenpulver 30%-ig in einer Nitrocelluloselacklösung und rakelt diese mit dem Spiralrakel ab, so erhält man eine Schicht mit hohem Deckvermögen, einem metallischen, platinähnlichen Glanz und einem ausgezeichnetes Flop-Verhalten.

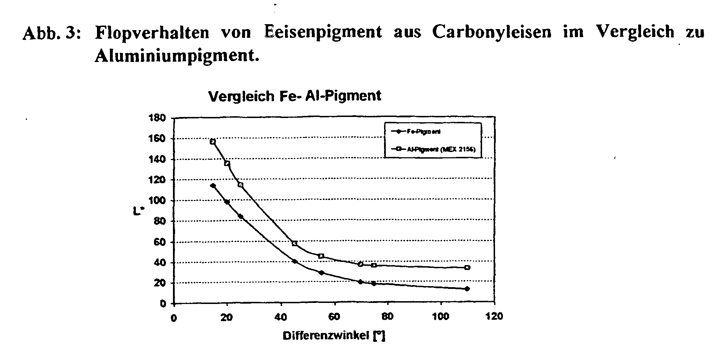

In der beigefügten Abb. 3 ist der Rakelabzug farbmetrisch charakterisiert und einem vergleichbaren Aluminiumpigment (Stapa MEX 2156, $d_{90}$: 25 $\mu$m, $d_{50}$: 16 $\mu$m und $d_{10}$: 9 $\mu$m; Silberdollarpigment) gegenübergestellt. Die Helligkeit L* ist aufgetragen gegen den Beobachtungswinkel relativ zum Reflektionswinkel (Einstrahlwinkel: 45°). Deutlich wird das sehr viel dunklere Verhalten des Eisenpigmentes über alle Beobachtungswinkel.

Der metallische "Flop" ist der starke Abfall der Helligkeit L* nahe dem Glanzwinkel zu höheren Winkeln. Ein von der Firma DuPont entwickeltes Maß für den Flop aus Helligkeitswerten ist durch folgende Formel gegeben:

$$Flopindex = 2,69 \times \frac{(L^*_{15°}\text{-}L^*_{110°})^{1,11}}{(L^*_{45°})^{0,86}}$$

Für die gegenübergestellten Beispiele ergeben sich Flopwerte von 17,5 für Aluminium- und 18,9 für die Eisenpigmente. Das Eisenpigment weist also einen höheren Flop auf.

In schmelzflüssigem PVC eindispergiert können die Eisenpartikel durch Anlegen eines äußeren Magnetfeldes orientiert werden, solange das PVC schmelzflüssig ist. Als Folge der Orientierung entstehen dekorative quasidreidimensional anmutende Hell/Dunkel - Muster.

**Beispiel 2**

100g reduziertes Carbonyleisenpulver wie in Beispiel 1 werden in eine Kugelmühle mit der Dimension 30 cm x 25 cm, die zur Hälfte mit 1,5 mm großen Stahlkugeln gefüllt ist, eingetragen. Dazu werden 0,56kg Testbenzin und 6g Stearinsäure gegeben. Danach wird die Mühle verschlossen und sechs Stunden lang bei 90 Umdrehungen pro Minute gedreht. Anschließend wird die Mühle entleert, das Mahlprodukt mit Testbenzin ausgewaschen und von den Mahlkörpern abgetrennt.

Das Eisenpigment wird in eine Tiefdruckmaschine mit Zylinder, die ein 70-iger Raster hat, als Dispersion verdruckt. Es ergeben sich hochglänzende Druckmuster mit einem platinähnlichen Metallic-Farbton, der im Druck bislang unbekannt ist.

### Beispiel 3

100g reduziertes Carbonyleisenpulver wie in Beispiel 1 werden in eine Kugelmühle mit der Dimension 30 cm x 25 cm, die zur Hälfte mit 1,5 mm großen Stahlkugeln gefüllt ist, eingetragen. Dazu werden 0,56kg Testbenzin und 6g Oktanphosphonsäure $((HO)_2OP-(C_8H_{17}))$ gegeben.

Danach wird die Mühle verschlossen und sechs Stunden lang bei 90 Umdrehungen pro Minute gedreht. Anschließend wird die Mühle entleert, das Mahlprodukt mit Testbenzin ausgewaschen und von den Mahlkörpern abgetrennt. Das erhaltene Pigment zeigt einen spezifischen Glanz und hohe magnetische Permeabilität. Über Laserstrahlbeugung (Cilas-Messungen) wird die mittlere Partikelgröße der Pulver mit 14 µm ermittelt. Rasterelektronenmikroskopische Untersuchungen ergeben ein Durchmesser zu Dikkenverhältnis der Plättchen von etwa 70:1.

Wird das Pigment mit einem Gewichtsanteil von 20% in eine Nitrozelluloselack-Lösung eindispergiert und abgerakelt, so zeigt die Beschichtung hohes Deckvermögen und einen titanähnlichen metallischen Glanz.

### Beispiel 4

100g reduziertes Carbonyleisenpulver der Firma BASF AG Ludwigshafen, mit der Bezeichnung "Carbonyleisenpulver CN", mittlere Partikelgröße 5,5 µm (d10 - Wert 3,5 µm, d90 - Wert 15 µm), Eisengehalt 99,8 % (C ≤ 0,006%, NL < 0,01%, 0 = 0,18%) werden in eine Kugelmühle mit der Dimension 30 cm x 25 cm, die zur Hälfte mit 1,5 mm großen Stahlkugeln gefüllt ist, eingetragen. Dazu werden 0,56 l Testbenzin und 1g Ölsäure gegeben.

Danach wird die Mühle verschlossen und sechs Stunden lang bei 58 Umdrehungen pro Minute gedreht. Anschließend wird die Mühle entleert, das Mahlprodukt mit Testbenzin ausgewaschen und von dem Mahlkörper getrennt.

Das erhaltene Effektpigment zeigt hohen metallischen Glanz und die magnetische Permeabilität von Weicheisenpulver. Die mittlere Partikelgröße des plättchenförmigen Eisenoxids liegt bei 15 µm wie über Laserstrahlbeugung (Cilas-Messungen) festgestellt werden konnte. Über rasterelektronenmikroskopische Aufnahmen wurde ein Durchmesser zu Dickenverhältnis der Plättchen von ungefähr 50:1 ermittelt.

### Beispiel 5

100g reduziertes Carbonyleisenpulver der Firma ISP, Wayne, N.J. mit der Bezeichnung R-1510, Eisengehalt 99,7%, mittlere Partikelgröße 8,2 µm wird unter Bedingungen wie in Beispiel 4 gemahlen.

Das erhaltene Produkt mit metallischem Glanz und hoher magnetischer Permeabilität wird magnetisch von den Mahlkörpern separiert, filtriert und anschließend über eine Stunde in 1L 0,1%iger wässriger $H_3PO_4$ - Lösung gerührt. Anschließend wird das plättchenförmige Eisenpigment filtriert und im Trockenschrank bei 95° C getrocknet. Das Produkt ist über einen Zeitraum von 60 Tagen nicht rostanfällig.

### Beispiel 6

350g des in Beispiel 4 hergestellten passivierten Eisen-Effektpigmentes wird in einem 10 l fassenden beheizbaren Technikumsmischer eingetragen und bei 100°C über Mischwerkzeuge in Bewegung gehalten. Über einen Verdampfer wird mit Hilfe eines Trägergasstromes (300 l/h, N2 als Trägergas) 3 - Aminopropyltrimethoxisilan (AMMO) und Wasser in den Mischer geleitet. Nach 30 Minuten wird das Effektpigment dem Mischer entnommen.

Das allseitig silanbelegte Effektpigment zeigt in Wasserlacken gute Korrosionsbeständigkeit und läßt über 60 Tage keinerlei Korrosionserscheinung erkennen.

### Beispiel 7:

90 g Eisenpigment wie in Beispiel 2 hergestellt werden in 300 ml Isopropanol in einem 1L Laborreaktor dispergiert und zum Kochen gebracht. Man gibt 20 g Tetraethoxysilan und 5 min später 11,6g destilliertes Wasser hinzu. Anschließend leitet man innerhalb 2h 9,6 g 25 %-ige wäßrige $NH_4OH$-Lösung hinzu und läßt anschließend weitere 4h kochen. Danach wird das Reaktionsgemisch abgekühlt, über Nacht weitergerührt, am nächsten Morgen abgenutscht und im Vakuumtrockenschrank bei 90°C getrocknet. Das Produkt weist einen $SiO_2$-Gehalt von 5,8% auf, was einer Ausbeute des $SiO_2$-Umsatzes von 96 % entspricht. In gängigen Gasungstests zeigt das Produkt eine ausgezeichnete Gasungsbeständigkeit und damit Eignung für wässrige Lacksysteme.

### Patentansprüche

1. Plättchenförmiges Eisenpigment, **dadurch gekennzeichnet, dass** es aus reduzierend behandeltem Carbonyleisenpulver hergestellt ist.

2. Plättchenförmiges Eisenpigment nach Anspruch 1, hergestellt aus reduzierend behandeltem Carbonyleisenpulver der Reinheit von mindestens 99,0%.

**3.** Plättchenförmiges Eisenpigment nach Anspruch 1 und 2, **dadurch gekennzeichnet, dass** es eine mittlere Partikelgröße des Carbonyleisenpulvers von 0,5 bis 15 µm, insbesondere von 1 bis 10 µm aufweist.

**4.** Plättchenförmiges Eisenpigment nach einem der Ansprüche 1 bis 3, **dadurch gekennzeichnet, dass** eine mittlere Partikelgröße der Eisenplättchen von 5 bis 100 µm, insbesondere 6 bis 60 µm und mittleren Dicken von 500 bis 30 nm, insbesondere von 200 bis 40 nm.

**5.** Plättchenförmiges Eisenpigment nach einem der Ansprüche 1 bis 4, **dadurch gekennzeichnet, dass** das Eisenpigment mit einer passivierenden Inhibitor- und/oder Korrosionsschutzschicht belegt ist.

**6.** Plättchenförmiges Eisenpigment nach Anspruch 5, **dadurch gekennzeichnet, dass** die passivierende Korrosionsschutzschicht aus Siliziumoxid, Zirkoniumoxid, Aluminiumoxid/-hydroxid, Phosphat, Phosphit, Chromoxid, Borat oder aus Mischungen derselben besteht.

**7.** Plättchenförmiges Eisenpigment nach Anspruch 5, **dadurch gekennzeichnet, dass** die Inhibitorbeschichtung aus Fettsäuren, Carbonsäurederivaten, organischen Phosphaten und Phosphonaten und deren Ester, organisch funktionalisierten Silanen, aliphatischen oder cyclischen Aminen, aliphatischen und aromatischen Nitroverbindungen, Sauerstoff-, Schwefel- oder Stickstoff-enthaltenden Heterocyclen, Schwefel/ Stickstoffverbindungen höherer Ketone, Aldehyde und Alkohole, Thiole, b-Diketone, b-Ketoester oder Gemischen derselben besteht.

**8.** Plättchenförmiges Eisenpigment nach einem der Ansprüche 1 bis 5, **dadurch gekennzeichnet, dass** zunächst eine passivierende Korrosionsschutzschicht nach Anspruch 6 und anschließend eine Inhibitorschicht nach Anspruch 7 aufgebracht wird oder zunächst eine Inhibitorschicht nach Anspruch 7 und anschließend eine passivierende Korrosionsschicht nach Anspruch 6 aufgebracht wird.

**9.** Verfahren zur Herstellung von Pigmenten nach einem der Ansprüche 1 bis 7, **gekennzeichnet durch** Trocken- oder Naßvermahlung von reduzierend behandelten Carbonyleisenpulver in Gegenwart von Mahlhilfsstoffen.

**10.** Verfahren zur Herstellung von Pigmenten nach Anspruch 9, **gekennzeichnet durch** Trocken- oder Naßvermahlung von reduzierend behandelten Carbonyleisenpulver in Gegenwart von Inhibitoren und/oder korrosionsschützenden Verbindungen.

**11.** Verfahren zur Herstellung von Pigmenten nach einem der Ansprüche 1 bis 4, 6 und 8 **gekennzeichnet durch** Trocken- oder Naßvermahlung von reduzierend behandelten Carbonyleisenpulver und nachträglichem Aufbringen einer Korrosionsschutzbarriere.

**12.** Verwendung von plättchenförmigen Eisenpigment nach einem der Ansprüche 1 bis 11, als Effektpigment im Anstrich und Lacksektor, für Kunststoffeinfärbungen, im Druck, in der Kosmetik sowie als Reflektormaterial bei der Herstellung mehrschichtiger Effektpigmente.

**13.** Verwendung von plättchenförmigen Eisenpigment nach Anspruch 12, als magnetisches Effektpigment im Anstrich und Lacksektor, für Kunststoffeinfärbungen, im Druck, in der Kosmetik sowie als Reflektormaterial bei der Herstellung mehrschichtiger Effektpigmente.

**14.** Verwendung von plättchenförmigen Eisenpigment nach einem der Ansprüche 1 bis 11 als magnetisierbares Effektpigment im Security-Druck.

**Claims**

**1.** A flake shaped iron pigment, **characterized in that** it is produced from reductively treated carbonyl iron powder.

**2.** A flake shaped iron pigment according to claim 1, produced from reductively treated carbonyl iron powder of at least 99.0% purity.

**3.** A flake shaped iron pigment according to claims 1 and 2, **characterized in that** it has an average particle size of the carbonyl iron powder of 0.5 to 15 µm, especially 1 to 10 µm.

**4.** A flake shaped iron pigment according to any of claims 1 through 3, **characterized in that** it has an average particle size of the iron flakes of 5 to 100 µm, especially 6 to 60 µm, and an average thicknesses of 500 to 30 nm, especially of 200 to 40 nm.

**5.** A flake shaped iron pigment according to any of claims 1 through 4, **characterized in that** the iron pigment is coated with a passivating inhibitor and/ or anticorrosive protection coating.

**6.** A flake shaped iron pigment according to claim 5, **characterized in that** the passivating anticorrosive protection layer is composed of silicon oxide, zirconium oxide, aluminum oxide/hydroxide, phosphate, phosphite, chromium oxide, borate or mixtures of the same.

7. A flake shaped iron pigment according to claim 5, **characterized in that** the inhibitor coating is composed of fatty acids, carboxylic acid derivatives, organic phosphates and phosphonates and their esters, organically functionalized silanes, aliphatic or cyclic amines, aliphatic and aromatic nitro compounds, oxygen-containing, sulfur-containing or nitrogen-containing heterocycles, sulfur/nitrogen compounds of higher ketones, aldehydes and alcohols, thiols, b-diketones, b-ketoesters or mixtures of the same.

8. A flake shaped iron pigment according to any of claims 1 through 5, **characterized in that** a passivating anticorrosive coating according to claim 6 is applied initially, followed by an inhibitor coating according to claim 7, or an inhibitor coating according to claim 7 is applied first and then a passivating anticorrosive coating according to claim 6.

9. A method for the production of pigments according to any of claims 1 through 7, **characterized by** the dry or wet grinding of reductively treated carbonyl iron powder in the presence of auxiliary grinding agents.

10. A method for the production of pigments according to claim 9, **characterized by** dry or wet grinding of reductively treated carbonyl iron powders in the presence of inhibitors and/or anticorrosive compounds.

11. A method for the production of pigments according to any of claims 1 through 4, 6, and 8, **characterized by** the wet or dry grinding of reductively treated carbonyl iron powder and subsequent application of an anti-corrosive barrier.

12. Use of flake shaped iron pigment according to any of claims 1 through 11 as effect pigment in the painting and lacquer industry for coloring plastics, in printing, cosmetics and as reflector material in the production of multi-layer effect pigments.

13. Use of flake shaped iron pigment according to claim 12 as magnetic effect pigment in the painting and lacquer industry, for coloring plastics, in printing, cosmetics, and as reflector material in the production of multi-layer effect pigments.

14. Use of flake shaped iron pigment according to any of claims 1 through 11 as magnetizable effect pigment in security printing.

**Revendications**

1. Pigment ferreux lamellaire, **caractérisé en ce qu'**il est produit à partir de poudre de fer carbonylée traitée par réduction.

2. Pigment ferreux lamellaire selon la revendication 1, produit à partir de poudre de fer carbonylée traitée par réduction, pure à au moins 99,0 %.

3. Pigment ferreux lamellaire selon la revendication 1 et 2, **caractérisé en ce qu'**il présente une granulométrie moyenne de la poudre de fer carbonylée de 0,5 à 15 $\mu$m, en particulier de 1 à 10 $\mu$m.

4. Pigment ferreux lamellaire selon l'une des revendications 1 à 3, **caractérisé en ce qu'**il présente une granulométrie moyenne des lamelles de fer de 5 à 100 $\mu$m, en particulier de 6 à 60 $\mu$m et des épaisseurs moyennes de 500 à 30 nm, en particulier de 200 à 40 nm.

5. Pigment ferreux lamellaire selon l'une des revendications 1 à 4, **caractérisé en ce que** le pigment ferreux est recouvert d'une couche protectrice anticorrosive et/ou inhibitrice passivante.

6. Pigment ferreux lamellaire selon la revendication 5, **caractérisé en ce que** la couche protectrice anticorrosive passivante se compose d'oxyde de silicium, oxyde de zirconium, oxyde/hydroxyde d'aluminium, phosphate, phosphite, oxyde de chrome, borate ou des mélanges de ceux-ci.

7. Pigment ferreux lamellaire selon la revendication 5, **caractérisé en ce que** le revêtement inhibiteur se compose d'acides gras, de dérivés d'acides carboxyliques, de phosphates et phosphonates organiques et leurs esters, de silanes organiquement fonctionnalisés, d'amines aliphatiques ou cycliques, de composés nitro aliphatiques et aromatiques, d'hétérocycles contenant de l'oxygène, du soufre ou de l'azote, de composés soufrés/azotés de cétones supérieures, d'aldéhydes et d'alcools, de thioles, b-dicétones, b-cétoesters ou mélanges de ceux-ci.

8. Pigment ferreux lamellaire selon l'une des revendications 1 à 5, **caractérisé en ce que** l'on dépose d'abord une couche anticorrosive passivante selon la revendication 6 et ensuite une couche inhibitrice selon la revendication 7 ou que l'on dépose d'abord une couche inhibitrice selon la revendication 7 et ensuite une couche anticorrosive passivante selon la revendication 6.

9. Procédé de fabrication de pigments selon l'une des revendications 1 à 7, **caractérisé par** le broyage à sec ou à l'état humide de la poudre de fer carbonylé traitée par réduction en présence d'auxiliaires de broyage.

10. Procédé de fabrication de pigments selon la revendication 9, **caractérisé par** le broyage à sec ou à l'état humide de la poudre de fer carbonylé traitée par réduction en présence d'inhibiteurs et/ou de composés anticorrosifs.

11. Procédé de fabrication de pigments selon l'une des revendications 1 à 4, 6 et 8, **caractérisé par** le broyage à sec ou à l'état humide de la poudre de fer carbonylé traitée par réduction et dépôt consécutif d'une barrière anti-corrosive.

12. Utilisation de pigment ferreux lamellaire selon l'une des revendications 1 à 11, à titre de pigment à effet dans le secteur de la peinture et des laques, pour les colorations de plastiques, dans l'impression, dans les cosmétiques ainsi que comme matériau réflecteur lors de la fabrication de pigments à effet multicouches.

13. Utilisation de pigment ferreux lamellaire selon la revendication 12, à titre de pigment à effet magnétique dans le secteur de la peinture et des laques, pour les colorations de plastiques, dans l'impression, dans les cosmétiques ainsi que comme matériau réflecteur lors de la fabrication de pigments à effet multicouches.

14. Utilisation de pigment ferreux lamellaire selon l'une des revendications 1 à 11, à titre de pigment à effet magnétisable dans l'impression de sécurités.

**Abb. 1: REM-Aufnahme von Fe-flakes aus Carbonyleisen bei 5000-facher Vergrößerung.**

**Abb. 2: REM-Aufnahme von Fe-flakes aus Carbonyleisen bei 20000-facher Vergrößerung.**

Abb. 3: Flopverhalten von Eeisenpigment aus Carbonyleisen im Vergleich zu Aluminiumpigment.

**Vergleich Fe- Al-Pigment**